# EUROPEAN PATENT APPLICATION

(11) **EP 1 164 503 A2**
(43) Date of publication of application: **19.12.2001**
(21) Application number: 01113825.2
(22) Date of filing: 06.06.2001
(51) Int. Cl.: G06F 17/30

(54) **Content managing system, content managing apparatus, and content managing method**

(30) Priority: 12.06.2000 JP 2000175330
(71) Applicant: SONY CORPORATION, Tokyo (JP)
(72) Inventor: Kurihara, Junichi, Shinagawa-ku, Tokyo (JP); Akashi, Tatsuya, Shinagawa-ku, Tokyo (JP); Ozaki, Junko, Shinagawa-ku, Tokyo (JP); Munenaka, Mika, Shinagawa-ku, Tokyo (JP)
(74) Representative: Müller . Hoffmann & Partner Patentanwälte

(57) **Abstract**

A content managing system is disclosed, that has a content managing portion comprising a content library for storing and linking the files of a plurality of contents provided by a content provider, a library managing means for managing the content library, a customer file storing means for storing the file of a content to an area assigned to each user, a customer file managing means for managing the customer file storing means, and a delivery managing means for managing the delivery of the files of contents to a user terminal unit, wherein the content managing portion and the user terminal unit are connected through a network, wherein the content managing portion is operated by the user terminal unit through the network so as to manage the file of a content of each user, and wherein while the file of a content is stored or linked in the area, the maintenance charge for the file of each content is paid to the content provider.

## Description

### BACKGROUND OF THE INVENTION

### Field of the Invention

The present invention relates to a content managing system, a content managing method, and a content managing apparatus for totally managing files of contents such as moving pictures, still pictures, and music programs.

### Description of the Related Art

A services for providing files of contents such as moving pictures, still pictures, and music programs through networks is becoming attractive. In such a conventional content delivery service, when a user purchases a content, he or she accesses a server that delivers the content with a user terminal unit and then downloads the file of the content through a network.

In recent years, servers that deliver contents such as moving pictures, still pictures, and music programs have been used on networks. When a user uses such a server, he or she connects the user terminal unit to the server through a network. When the terminal unit is connected to the server, the names and data of contents provided by the server are displayed. When the user purchases a content, a download request for the desired content is sent from the terminal unit to the server.

When the server receives the content download request, the server retrieves the file of the desired content from a library and transfers the retrieved file to the user terminal unit side through the network. The file of the content is stored to a hard disk drive or the like of the user terminal unit side. Alternatively, the user can stream-reproduce the file of the content so as to directly browse it.

Thus, in such a conventional content delivery service, when a user purchases a content, the file of the content is directly transferred from a server to a user terminal unit.

However, the user should download files of contents such as moving pictures, still pictures, and music programs from a server before the supervisor of the server deletes files from the library. Thus, a large number of files of contents should be transferred in a short time.

In addition, to prevent files of contents downloaded to a user terminal unit from being illegally copied, a copy protecting system should be used for contents and a delivery method.

In addition, the user can stream-reproduce contents such as moving pictures, still pictures, and music programs and browse them only when they are stored in the library of the server. Thus, the user cannot manage favorite files as his or her belongings.

In addition, the information provider side should charge users for contents in a predetermined period or whenever the users stream-reproduce the contents. Thus, the users should watch or listen to the contents in a limited period.

### OBJECTS AND SUMMARY OF THE INVENTION

Therefore, an object of the present invention is to provide a content managing system, a content managing apparatus, and a content managing method that allow files of favorite contents to be stored in a predetermined user area.

A first aspect of the present invention is a content managing system having a content managing portion comprising a content library for storing the files of a plurality of contents provided by a content provider, a library managing means for managing the content library, a customer file storing means for storing the file of a content to an area assigned to each user, a customer file managing means for managing the customer file storing means, and a delivery managing means for managing the delivery of the files of contents to a user terminal unit, wherein the content managing portion and the user terminal unit are connected through a network, wherein the content managing portion is operated by the user terminal unit through the network so as to manage the file of a content of each user, and wherein while the file of a content is stored in the area, the fee charged for the file of each content is paid to the content provider.

A second aspect of the present invention is a content managing apparatus, comprising a content library for storing the files of a plurality of contents provided by a content provider, a library managing means for managing the content library, a customer file storing means for storing the file of a content to an area assigned to each user, a customer file managing means for managing the customer file storing means, a delivery managing means for managing the delivery of the files of contents to a user terminal unit, and a communicating means for connecting the content managing apparatus to a network, wherein the content managing apparatus is connected to the user terminal unit through the network, and wherein while the file of a content is stored in the area, the fee charged for the file of each content is paid to the content provider.

A third aspect of the present invention is a content managing method, comprising the steps of disposing a content library for storing the files of a plurality of contents provided by a content provider, disposing a content managing portion for assigning a user area for storing the file of a content of each user to a customer file storage, connecting the content managing portion and the user terminal unit through a network, operating the content managing portion through the network with the user terminal unit so as to manage the file of a content of each user, and while the file of a content is stored in the area, paying the fee charged for the file of each content to the content provider.

The content managing company has a content library, a library managing server, a customer file storage, a customer file managing server, a delivery managing database, and a delivery managing server. The content library stores many contents that the content providing company provides and sells. The library managing server manages the content library. The customer file storage stores contents of users. The customer file managing server manages the customer file storage. The delivery managing database stores delivery information. The delivery managing server manages the delivery of contents. User areas for individual users are assigned in the customer file storage. A user terminal unit is connected to a server of the content managing company through a network. While files of contents are stored in the user area, the fee charged for each file is paid to the content providing company.

The customer file storage provides a user area for storing a content to a user who made a contract with the content managing company. The user can freely use the user area of the customer file storage in the range of the contracted capacity while the contract is valid. The user can add, delete, and move a content stored in the user area. In addition, the user can store the file of a content that he or she has purchased to the user area. Thus, the user can freely stream-reproduce the content.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a block diagram showing the overall structure of a content managing system according to the present invention;
Fig. 2 is a schematic diagram for explaining the content managing system according to the present invention;
Fig. 3 is a schematic diagram for explaining the content managing system according to the present invention;
Fig. 4 is a schematic diagram for explaining the content managing system according to the present invention;
Fig. 5 is a schematic diagram for explaining the content managing system according to the present invention;
Fig. 6 is a schematic diagram for explaining a page of the content managing system according to the present invention;
Fig. 7 is a schematic diagram for explaining a page of the content managing system according to the present invention;
Fig. 8 is a schematic diagram for explaining a page of the content managing system according to the present invention;
Fig. 9 is a schematic diagram for explaining a page of the content managing system according to the present invention;
Fig. 10 is a schematic diagram for explaining a page of the content managing system according to the present invention;
Fig. 11 is a schematic diagram for explaining a page of the content managing system according to the present invention;
Fig. 12 is a schematic diagram for explaining a page of the content managing system according to the present invention;
Fig. 13 is a schematic diagram for explaining a page of the content managing system according to the present invention;
Fig. 14 is a schematic diagram for explaining a page of the content managing system according to the present invention; and
Fig. 15 is a schematic diagram for explaining a page of the content managing system according to the present invention.

### DETAILED DESCRIPTION OF THE PREFERRED EMBODIMENT

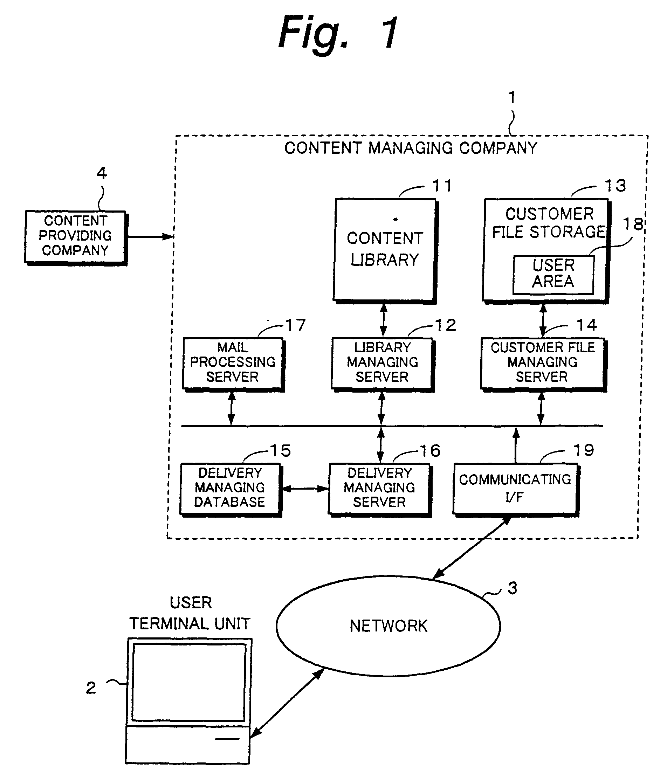

Next, with reference to the accompanying drawings, an embodiment of the present invention will be described. Fig. 1 shows an example of the structure of a system according to the present invention. In Fig. 1, reference numeral 1 is a content managing company. The content managing company 1 totally manages content data of moving pictures such as movies and dramas, content data of still pictures, content data of music programs, and so forth that a content providing company 4 provides. The content managing company 1 sells and provides contents. In addition, the content managing company 1 performs a service for storing user's contents and a service in association therewith.

The content managing company 1 has a content library 11, a library managing server 12, a customer file storage 13, a customer file managing server 14, a delivery managing database 15, and a delivery managing server 16. The content library 11 stores many contents that the content managing company 1 provides and sells. The library managing server 12 manages the content library 11. The customer file storage 13 stores users' contents. The customer file managing server 14 manages the customer file storage 13. The delivery managing database 15 stores delivery information. The delivery managing server 16 manages the delivery of contents. In addition, the content managing company 1 has a mail processing server 17. The mail processing server 17 exchanges messages with customers.

Those servers 12, 14, 16, and 17 are connected through a network. The servers 12, 14, 16, and 17 can exchange data thereamong. The servers 12, 14, 16, and 17 can be connected to a network 3 through a communicating interface 19 such as a router. The network 3 is for example the Internet.

Each of the servers 12, 14, 16, and 17 may be accomplished by a dedicated computer. Alternatively, the servers 12, 14, 16, and 17 may be accomplished by the same computer. In addition, the content library 11, the customer file storage 13, and the customer database 15 may be accomplished by storage devices of the servers. Alternatively, the content library 11, the customer file storage 13, and the customer database 15 may be accomplished by dedicated computers. In the example shown in Fig. 1, the servers 12, 14, 16, and 17, the content library 11, the customer file storage 13, and the customer database 15 are disposed in the same content managing company 1. Alternatively, they may be managed by different companies.

A user terminal unit 2 is a terminal unit that a user operates. The user terminal unit 2 can be accomplished by a personal computer. The user terminal unit 2 has a communication function. The user terminal unit 2 can be connected to the network 3. The user terminal unit 2 can be connected to the network 3 through a telephone line, a network service of a CATV (Cable Television), a network service of a cellular phone, or the like. Of course, the user terminal unit 2 can be connected to the network 3 through a dedicated line.

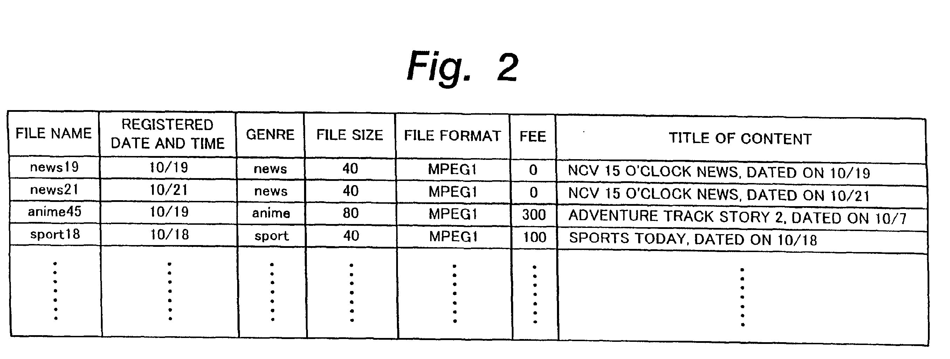

The content library 11 has a storage device having a large storage capacity so that it can store many content data that the content managing company 1 provides and sells. As shown in Fig. 2, the file of each content stored in the content library 11 is managed with "file name", "registered date and time", "genre", "file size", "file format", "fee", and "title of content".

The "file name" is a uniquely designated name of each content file so as to identify it. The "registered date and time" is the date and time at which each content file will be registered or was registered. The "title of content" is a sentence that represents the title of the file of each content. The "title of content" may contain a still picture of a typical scene, a moving picture thereof, an audio guide, or the like. The "genre" is information as which the file of each content is categorized. The "file size" is the size of the file of each content. The "file size" is normally a value expressed as bytes. Alternatively, the "file size" may be a special parameter corresponding to each file format. For example, in the case of a moving picture, the "file size" may be a value expressed as the reproduction time of the moving picture. The "file format" is information that represents the format of the file of each content. The "fee" is the fee necessary for purchasing the file of each content. The "fee" may contain copyright information.

The library managing server 12 manages the content library 11. When another device on the network sends a content request to the library managing server 12, it searches the content library 11 for the file of the requested content and transfers the retrieved file of the content to the device. In addition, the library managing server 12 has a searching function. When the library managing server 12 receives a keyword, the library managing server 12 searches the content library 11 for the file of a content that matches the keyword and outputs the searched result. In addition, the library managing server 12 can output the searched result corresponding to the file name, the registered date and time, the genre, the file size, the fee, and the title of content.

In addition to the files of contents stored in the content library 11, the library managing server 12 manages the files of contents that are scheduled to be delivered later. Corresponding to a request received from an external device, the library managing server 12 can provide information about the files of contents that are scheduled to be delivered later and output the searched result. When the library managing server 12 receives the file of a content that will be newly delivered, the library managing server 12 registers the file of the content to the content library 11.

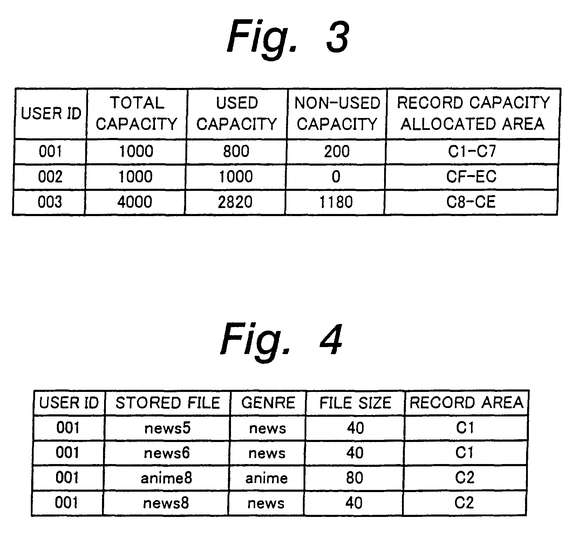

The customer file storage 13 provides a user area 18 that a user who made a contract with the content managing company 1 can use for storing a content. As shown in Fig. 3, the customer file storage 13 assigns a record capacity to each user. Each user is managed with a unique user ID. The total capacity for each user is designated corresponding to a contract that each user made with the content managing company 1. Corresponding to the contract, the total capacity is designated and assigned as the user area 18 for each user. Each user can freely use the assigned user area 18 of the customer file storage 13 in the range of the contracted capacity in the period corresponding to the contract. In other words, each user can store the file of a new content to the user area 18, delete the file of a content from the user area 18, move the file of a content in the user area 18, and download the file of a content stored in the user area 18 to the user terminal unit 2. The user can store the file of his or her content to the user area 18.

When the content managing company 1 makes a contract with each user, the content managing company 1 will charge the user corresponding to the size of the user area 18. Of cause, the content managing company 1 can change the size of the user area 18 later.

Each user can purchase the file of a content stored in the content library 11 and the file of a content that is scheduled to be delivered later. The user can store the file of the purchased content to the user area 18 of the customer file storage 13. In addition, the user can store the file of a content that he or she created to the user area 18 of the customer file storage 13.

The customer file managing server 14 manages the files of contents stored in the user area 18 for each user of the customer file storage 13 using a database shown in Fig. 4. The customer file managing server 14 can perform for example a file searching process, a file transferring process, a file deleting process, and so forth. The customer file managing server 14 prohibits each user from accessing the user area 18 assigned to another user.

As shown in Fig. 4, each user is managed with a unique user ID. The file of each content stored by each user is managed with the user ID, the file name, the genre, the file size, and the storage record area. Moreover, the customer file managing server 14 performs a record capacity increasing / decreasing process for the user area 18 corresponding to a changed contract, a contract period managing process, and so forth.

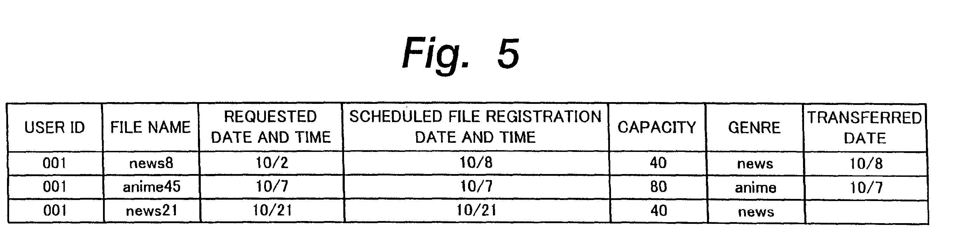

The delivery managing server 16 manages the delivery of content data. When the delivery managing server 16 receives a content purchase request from a user, the delivery managing server 16 creates delivery management information for each user in the delivery managing database 15. As shown in Fig. 5, the delivery managing database 15 is managed with the user ID, the file name, the requested date and time, the scheduled file registration date and time, the capacity, the genre, and the file transferred date.

When a user purchases a content, a file purchase request command is transmitted from the user terminal unit 2 to the delivery managing server 16 through the network 3. Corresponding to the purchase request, delivery management information for each user is created in the delivery managing database 15.

The delivery managing server 16 sends a copy command or a link command for copying and linking the file and for linking the file of the content to the user area 18 for the user to the library managing server 12. The library managing server 12 searches the content library 11 for the file of a desired content. When the content library 11 contains the file, the library managing server 12 retrieves the file from the content library 11 and sends the retrieved file to the customer file managing server 14. The customer file managing server 14 copies the file to the user area 18 of the customer file storage 13.

Thus, the content purchasing process can be accomplished as a copying or linking process for copying or linking a file or linking a file from the content library 11 to the user area 18 of the customer file storage 15. Since the capacity of the file of a content of a moving picture is large, it takes a long time to transfer the file. However, in such a system, since a file is copied between servers on the same network, the content purchasing process can be quickly completed.

A user can access the user area 18 assigned to him or her through the user terminal unit 2. As was described above, the file of a content that the user purchased is stored in the user area 18. The user can access the user area 18 and then stream-reproduce it.

In the system, as was described above, the user area 18 for storing a content is assigned to each user who made a contract with the content managing company 1. Each user can use a content purchase service and other services with the user area 18.

When the user purchases the file of a content stored in the content library 11 or the file of a content that is scheduled to be delivered later, the file is stored to the assigned user area 18. The user can anytime enjoy the content stored in the user area 18. In that case, contents stored in the user area 18 are prohibited from being downloaded to the user terminal unit 2.

The fee for the content stored in the user area 18 is paid from the content managing company 1 to the content providing company 4, when the user purchased the content. While the purchased content is stored in the user area 18, the fee for the purchased content is stored in the user area 18, the maintenance charge of the content which is some percentage of the content fee, is paid to the content providing company 4 from the monthly fee or annual fee for the contract that the user made with the content managing company 1. The content managing company 1 pays the charge from the monthly fee or annual fee for the contract that the user made with the content managing company 1.

Thus, when the user pays the fee for the purchased content and the fee for the user area 18 for the contract that the user made with the content managing company 1, the user can own the purchased content and freely enjoy the content. In addition, the content providing company 4 can earn the fee for the content stored in the user area 18 from the content managing company 1 until the content is deleted from the user area 18 and prevent the user from illegally copying or linking the content. When the number of contents that the user manages increases, he or she makes a contract with the content managing company 1 for an increase of the user area 18. Thus, the money for which the content managing company 1 earns from the user increases.

Next, a service provided by the content managing company 1 will be described in reality.

The user terminal unit 2 has a communicating function for connecting it to the network 3. A browser that allows the user to browse web pages is installed to the user terminal unit 2. When the user uses a service provided by the content managing company 1, he or she makes a contract with the content managing company 1. After the user made a contract with the content managing company 1, it assigns a user ID and a password to the user.

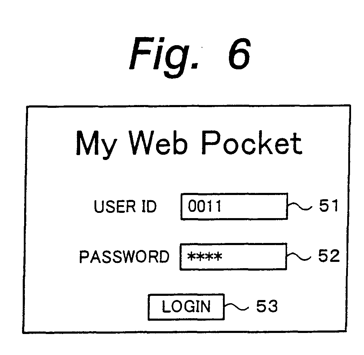

When a user who made a contract with the content managing company 1 wants to use the service of the content managing company 1, he or she connects the user terminal unit 2 to the network 3, starts up the browser, and accesses the URL (Uniform Resource Locator) of the content managing company 1. When the user terminal unit 2 accesses the URL of the content managing company 1, it transmits an authentication page shown in Fig. 6 to the user terminal unit 2.

The authentication page contains a user ID input box 51 and a password input box 52. The user inputs the user ID and the password assigned by the content managing company 1 to those boxes and then clicks a login button 53 with the user terminal unit 2.

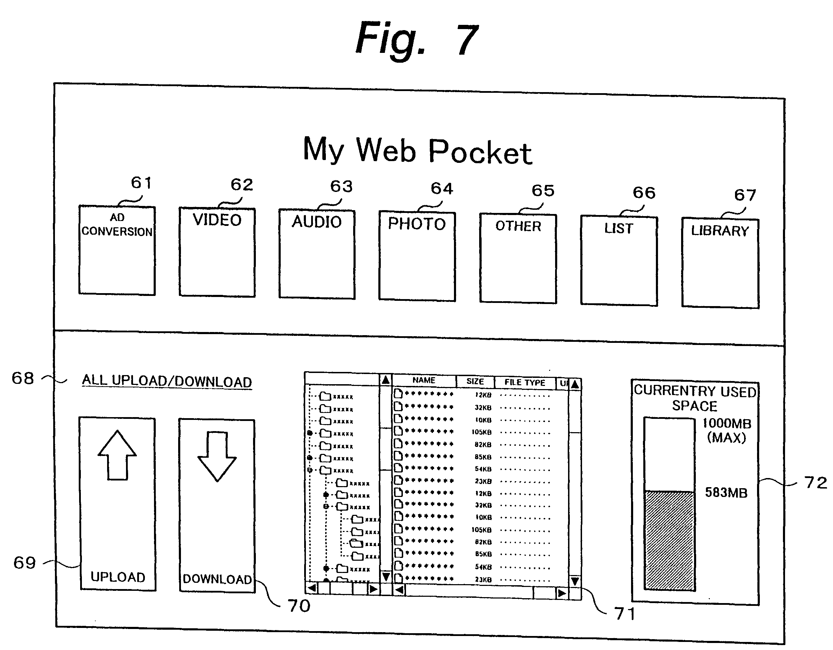

When the user inputs the user ID and the password to those boxes and then clicks the login button 53, the content managing company 1 performs an authenticating process for determining whether or not the accessed user is a user who made a contract with the content managing company 1. When the content managing company 1 has authenticated the user as a valid user, the content managing company 1 transmits a user home page shown in Fig. 7 to the user terminal unit 2.

The user home page is a home page that is dedicated for each user and that is used for receiving a service from the content managing company 1. As an example of a service, the user home page displays an AD CONVERSION button 61, a VIDEO button 62, an AUDIO button 63, a PHOTO button 64, an OTHER button 65, a LIST button 66, a LIBRARY button 67, an ALL UPLOAD / DOWNLOAD button 68, an UPLOAD button 69, and a DOWNLOAD button 70. In addition, the user home page displays a display portion 71 and a display portion 72. The display portion 71 displays the directory of the user terminal unit 2. The display portion 72 displays the currently used space of the user area 18. A left pane and a right pane of the display portion 71 display a tree view and files, respectively.

When the user clicks the AD CONVERSION button 61, an AD CONVERSION page appears. When the user clicks the VIDEO button 62, a VIDEO page appears. When the user clicks the AUDIO button 63, an AUDIO page appears. When the user clicks the PHOTO button 64, a PHOTO page appears. When the user clicks the OTHER button 65, other pages for computer application software, games, and so forth appear. When the user clicks the LIST button 66, all the VIDEO page, the AUDIO page, the PHOTO page, and the OTHER page appear. When the user clicks the LIBRARY button 67, a content library page appears. When the user clicks the ALL UPLOAD / DOWNLOAD button 68, an ALL UPLOAD / DOWNLOAD page appears. When the user clicks the UPLOAD button 69, an UPLOAD page appears. When the user clicks the DOWNLOAD button 70, a DOWNLOAD page appears.

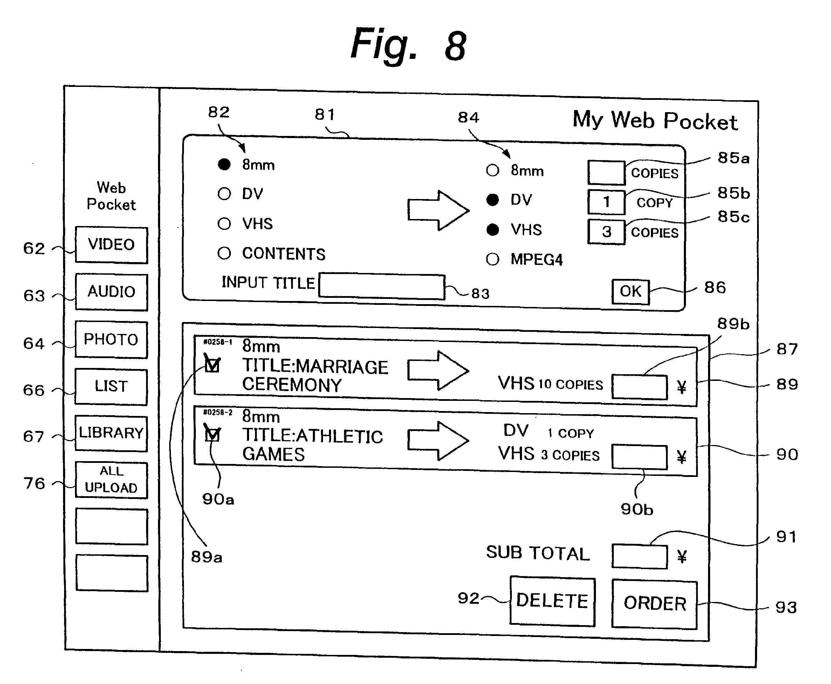

When the user clicks the AD CONVERSION button 61 on the user home page with the user terminal unit 2, an AD CONVERSION request command is transmitted to the content managing company 1 through the network 3. When the content managing company 1 receives the AD CONVERSION request command from the user terminal unit 2, the content managing company 1 transmits the AD CONVERSION page shown in Fig. 8 to the user terminal unit 2 through the network 3.

The AD CONVERSION page is a page on which a content recorded on a record medium that has been mailed or sent from the user is converted into data for another record medium that the user desires. The converted data is recorded to the desired record medium and mailed or sent to the user. Alternatively, the converted data is stored to the user area 18. A record medium selection display portion 81 displays a conversion source display portion 82, a content title input box 83, a conversion destination display portion 84, and an OK button 88.

The conversion source display portion 82 displays 8 mm video tape, DV video tape, VHS video tape, and contents. The user selects one of the record mediums displayed in the record medium selection display portion 81. The check box for the selected record medium is checked. Namely, the color of the check box for the selected record medium is changed from white to black. Only when the user selects the contents in the conversion source display portion 82, he or she can input the title of a content to the content title input box 83. To proceed to the next step, one of the record mediums displayed in the conversion source display portion 82 should have been selected.

The conversion destination display portion 84 displays 8 mm video tape, DV video tape, VHS video tape, and MPEG 4. The user selects one of the record mediums displayed in the conversion destination display portion 84. When data of the record medium selected in the conversion source display portion 82 is recorded to the user area 18, MPEG 4 is selected. At least one record medium should be selected in the conversion destination display portion 84. When the user selects 8 mm video tape, DV video tape, and / or VHS video tape, input boxes 85a, 85b, and 85c appear, respectively. Each of the input boxes 85a, 85b, and 85c is used to input the number of copies. When 8 mm video tape, DV video tape, and / or VHS video tape have been selected in the conversion destination display portion 84, the user cannot omit entries for the input boxes 85a, 85b, and 85c.

In the example shown in Fig. 8, 8 mm video tape has been selected in the conversion source display portion 82, whereas DV video tape for one copy and VHS video tape for three copies have been selected in the conversion destination display portion 84.

In addition, the AD CONVERSION page displays a selected title display portion 87. The selected title display portion 87 displays the titles of a plurality of selected contents. The selected title display portion 87 displays for example title display portions 89 and 90. The title display portion 89 displays a reference number of the title of a content, a check box 89a, a conversion source record medium, the title of the content, a conversion destination record medium, the number of copies, and a charged fee display box 89b. The reference number is composed of for example a user ID and a suffix number. Likewise, the title display portion 90 displays a reference number of the title of a content, a check box 90a, a conversion source record medium, the title of a content, a conversion destination record medium, the number of copies, and a charged fee display box 90b.

Whenever the user clicks the check box 89a (check box 90a) on the AD CONVERSION page with the user terminal unit 2, the state of the check mark cyclically changes between checked state (the check mark appears) and non-checked state (the check mark disappears). When the check mark appear, it represent that the content has been selected. When the check mark disappears, it represent that the content has not been selected. The charged fee display box 89b and the charged fee display box 90b display fees charged in the process. A sub total display portion 91 displays the sub total of the fees of the contents checked in the check box 89a and / or the check box 90a. When the user clicks a DELETE button 92 with the user terminal unit 2, data displayed in the title display portion 89 and / or the title display portion 90 with the check marks in the check box 89a and / or the check box 90a are deleted. When the user clicks an ORDER button 93 with the user terminal unit 2, the conversions for the contents checked with the check marks in the check box 89a and / or check box 90a are ordered.

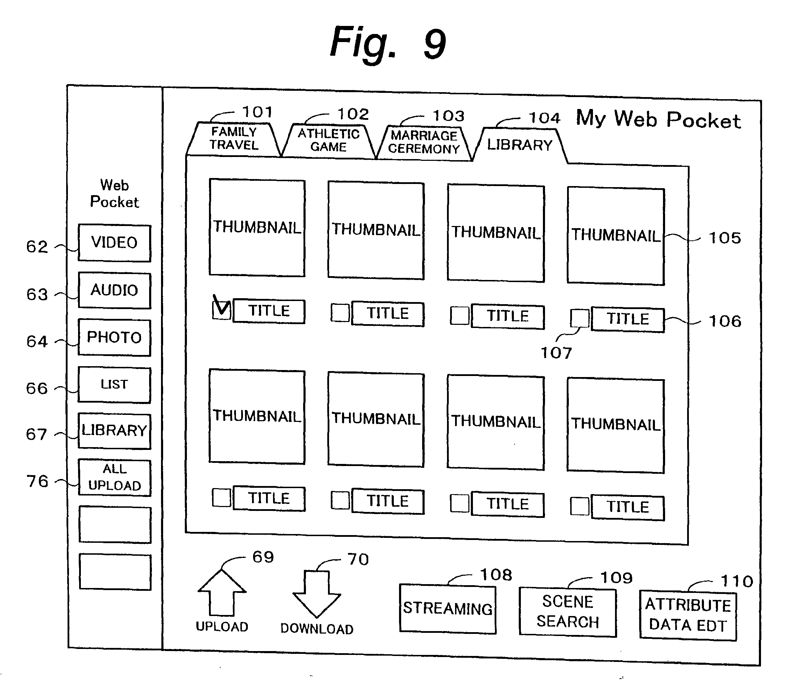

When the user clicks the VIDEO button 62 on the user home page shown in Fig. 7 with the user terminal unit 2, a VIDEO request command is sent to the content managing company 1 through the network 3. When the content managing company 1 receives the VIDEO request command from the user terminal unit 2, the content managing company 1 sends a VIDEO page shown in Fig. 9 to the user terminal unit 2 through the network 3.

The VIDEO page displays at least one folder. Each folder contains a tab that displays the name of the folder. In the example shown in Fig. 9, the VIDEO page displays a family travel folder 101, an athletic games folder 102, a marriage ceremony folder 103, and a library folder 104. A left pane of the VIDEO page displays the VIDEO button 62, the AUDIO button 63, the PHOTO button 64, the LIST button 66, the LIBRARY button 67, and an ALL UPLOAD button 76. A lower pane of the VIDEO page displays the UPLOAD button 69, the DOWNLOAD button 70, a STREAMING REPRODUCTION button 108, a SCENE SEARCH button 109, and an ATTRIBUTE DATA EDIT button 110.

Next, with reference to the library folder 104 selected in Fig. 9, the VIDEO page will be described. The library folder 104 displays a plurality of sets of thumbnail pictures 105 as reduced still pictures of contents, titles 106 of the contents, and check boxes 107. Like the check box 89a and the check box 90a, whenever the user clicks each check box 107 with the user terminal unit 2, the state of the check box 107 cyclically changes between the checked state (a check mark appears) and the non-checked state (a check mark disappears).

When the user clicks the STREAMING REPRODUCTION button 108, a STREAMING REPRODUCTION page appears. When the user clicks the SCENE SEARCH button 109, a SCENE SEARCH page appears. When the user clicks the ATTRIBUTE DATA EDIT button 110, an ATTRIBUTE DATA EDIT page appears.

A new folder can be created on the VIDEO page. In addition, a folder that is displayed on the VIDEO page can be deleted.

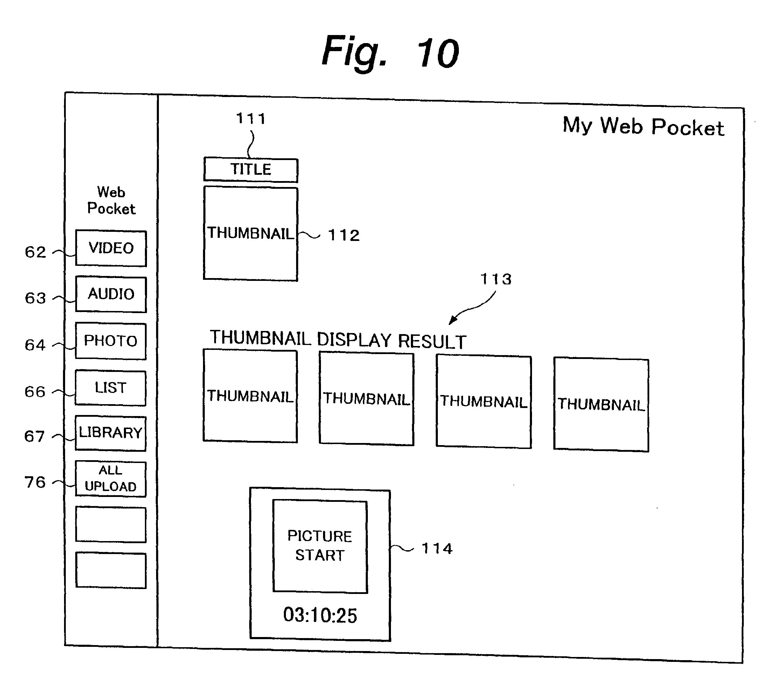

When the user clicks the STREAMING REPRODUCTION button 108 on the VIDEO page with the user terminal unit 2, a streaming reproduction request command is sent to the content managing company 1 through the network 3. When the content managing company 1 receives the streaming reproduction request command from the user terminal unit 2, the content managing company 1 sends a STREAMING REPRODUCTION page shown in Fig. 10 to the user terminal unit 2 through the network 3. The STREAMING REPRODUCTION page displays a content with a check mark in the check box 107 on the VIDEO page.

A title 111 on the STREAMING REPRODUCTION page displays the same title as the title 106 of the selected content. A thumbnail 112 displays the same thumbnail picture as the thumbnail picture 105. A thumbnail picture display result 113 displays a plurality of thumbnail pictures of typical scenes of the selected content. When the user clicks one of the thumbnail pictures of the thumbnail picture display result 113 with the user terminal unit 2, a picture display portion 114 stream-reproduces the content. A lower portion of the picture display portion 114 displays the elapsed time of the streaming reproduction for the content. A left pane of the STREAMING REPRODUCTION page displays the VIDEO button 62, the AUDIO button 63, the PHOTO button 64, the LIST button 66, the LIBRARY button 67, and the ALL UPLOAD button 76.

When the user clicks one of the thumbnail pictures of the thumbnail picture display result 113, the picture display portion 114 may display the content starting from the clicked thumbnail picture. Alternatively, the picture display portion 114 may display the content from the beginning.

The thumbnail picture display result 113 displays thumbnail pictures of feature scenes of the content. Alternatively, the thumbnail picture display result 113 may display thumbnail pictures at predetermined intervals of the content. Further alternatively, the thumbnail picture display result 113 may display thumbnail pictures of the beginnings of the individual scenes of the content.

When the user clicks one of the thumbnail pictures of the thumbnail picture display result 113, the picture display portion 114 displays a picture that contains the clicked thumbnail picture. Alternatively, when the user double-clicks a thumbnail picture of the thumbnail picture display result 113, the picture display portion 114 may display a picture that contains the double-clicked thumbnail picture.

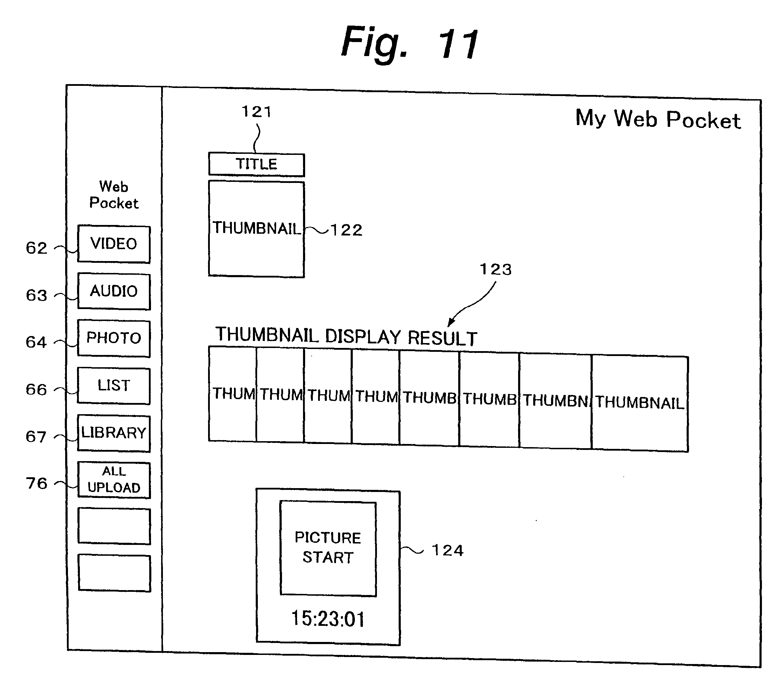

When the user clicks the SCENE SEARCH button 109 on the VIDEO page shown in Fig. 9 with the user terminal unit 2, a scene search request command is sent to the content managing company 1 through the network 3. When the content managing company 1 receives the scene search request command from the user terminal unit 2, the content managing company 1 sends a SCENE SEARCH page shown in Fig. 11 to the user terminal unit 2 through the network 3. The SCENE SEARCH page displays a content that is checked with a check mark in a check box 107 on the VIDEO page. In other words, the SCENE SEARCH page displays a content selected on the VIDEO page.

A title 121 displays the same title as the title 106 of the selected content. A thumbnail picture 122 displays the same thumbnail picture as the thumbnail picture 105. A thumbnail picture display result 123 displays a plurality of thumbnail pictures of feature scenes of the selected content. When the user clicks one of the thumbnail pictures of the thumbnail picture display result 123 with the user terminal unit 2, a picture display portion 124 stream-reproduces the content that contains the clicked thumbnail picture. A lower pane of the picture display portion 124 displays the elapsed time of the streaming reproduction for the content. A left pane of the SCENE SEARCH page displays the VIDEO button 62, the AUDIO button 63, the PHOTO button 64, the LIST button 66, the LIBRARY button 67, and the ALL UPLOAD button 76.

When the user clicks one of the thumbnail pictures of the thumbnail picture display result 123, the picture display portion 124 may display the content starting from the clicked thumbnail picture. Alternatively, the picture display portion 124 may display the content from the beginning.

The thumbnail picture display result 123 displays thumbnail pictures of feature scenes of the content. Alternatively, the thumbnail picture display result 123 may display thumbnail pictures at predetermined intervals of the content. Further alternatively, the thumbnail picture display result 123 may display thumbnail pictures of the beginnings of the individual scenes of the content. Alternatively, the thumbnail picture display result 123 may successively display the thumbnail pictures.

When the user clicks one of the thumbnail pictures of the thumbnail picture display result 123, the picture display portion 124 displays a picture that contains the clicked thumbnail picture. Alternatively, when the user double-clicks one of the thumbnail pictures of the thumbnail picture display result 123, the picture display portion 124 may display a picture that contains the double-clicked thumbnail picture.

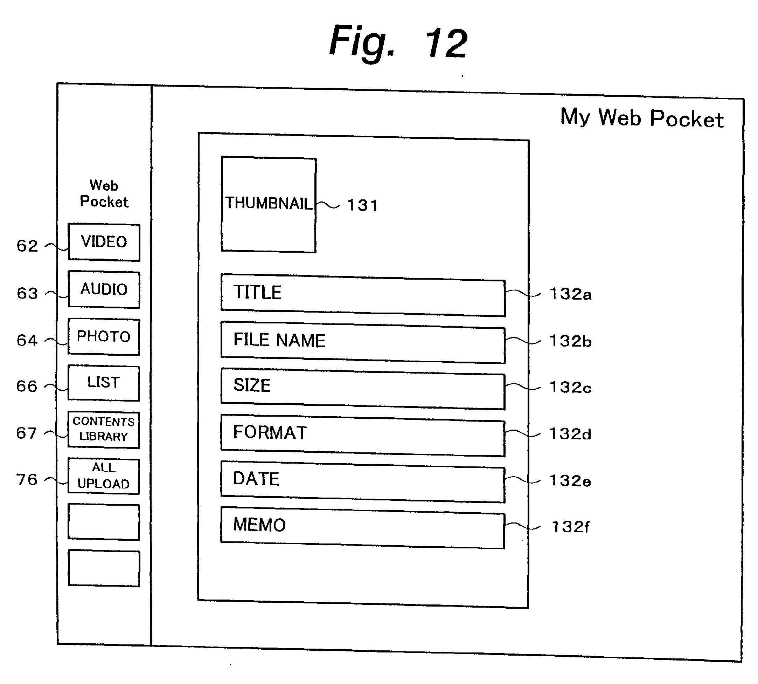

When the user clicks the ATTRIBUTE DATA EDIT button 110 on the VIDEO page shown in Fig. 9 with the user terminal unit 2, an attribute data edit request command is sent to the content managing company 1 through the network 3. When the content managing company 1 receives the attribute data edit request command from the user terminal unit 2, the content managing company 1 sends an ATTRIBUTE DATA EDIT page shown in Fig. 12 to the user terminal unit 2 through the network 3. The ATTRIBUTE DATA EDIT page displays a content that is checked with a check mark in a check box 107 on the VIDEO page. In other words, the ATTRIBUTE DATA EDIT page displays a content selected on the VIDEO page.

A thumbnail 131 displays the same thumbnail picture as the thumbnail picture 105 of the selected content. A lower pane of the ATTRIBUTE DATA EDIT page displays a title box 132a, a file name box 132b, and a size box 132c. The title box 132a displays the title of the content. The file name box 132b displays the file name of the content. The size box 132c displays the size of the content. The lower pane also displays a format box 132d, a date box 132e, and a memo box 132f. The format box 132d displays the format of the file of the content. The date box 132e displays the date on which the content was transferred to the user area 18. The memo box 132f displays a memo of the content. A left pane of the ATTRIBUTE DATA EDIT page displays the VIDEO button 62, the AUDIO button 63, the PHOTO button 64, the LIST button 66, the LIBRARY button 67, and the ALL UPLOAD button 76.

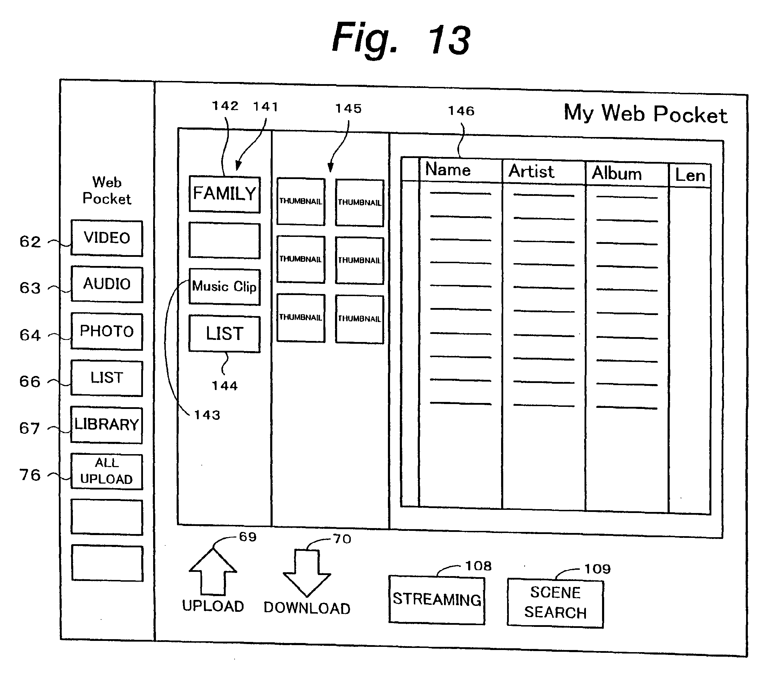

When the user clicks the AUDIO button 63 on the user home page shown in Fig. 7 with the user terminal unit 2, an AUDIO request command is sent to the content managing company 1 through the network 3. When the content managing company 1 receives the AUDIO request command from the user terminal unit 2, the content managing company 1 sends an AUDIO page shown in Fig. 13 to the user terminal unit 2 through the network 3.

The AUDIO page displays a display portion 141, a display portion 145, and a display portion 146. The display portion 141 displays a FAMILY button 142, a MUSIC CLIP button 143, and a LIST button 144. The display portion 145 displays a plurality of thumbnail pictures. The display portion 146 displays data of music programs stored in the user area 18. A left pane of the AUDIO page displays the VIDEO button 62, the AUDIO button 63, the PHOTO button 64, the LIST button 66, the LIBRARY button 67, and the ALL UPLOAD button 76. A lower pane of the AUDIO page displays the UPLOAD button 69, the DOWNLOAD button 70, the STREAMING REPRODUCTION button 108, and the SCENE SEARCH button 109. The display portion 146 displays for example file name, artist name, album name, and file length of each of music programs stored in the user area 18.

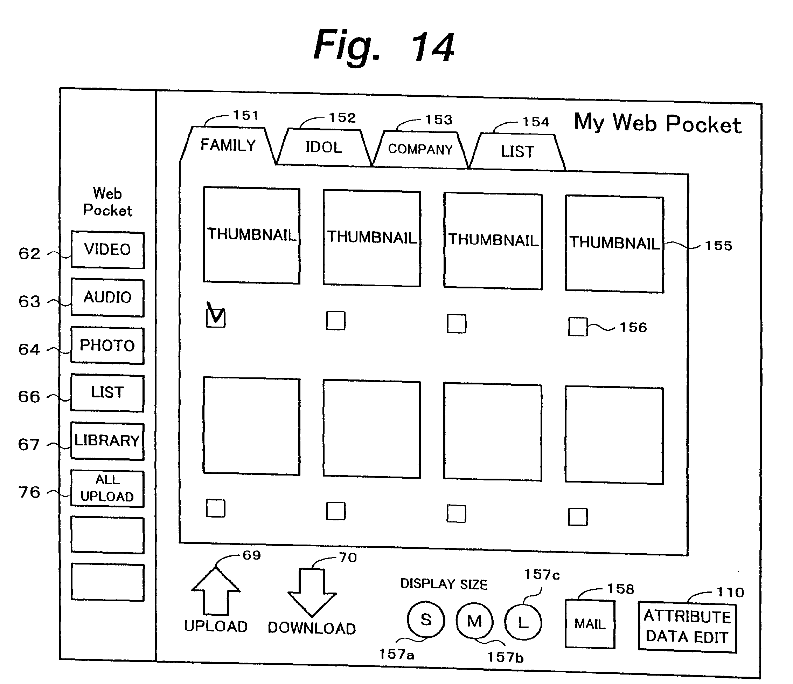

When the user clicks the PHOTO button 64 on the user home page shown in Fig. 7 with the user terminal unit 2, a PHOTO request command is sent to the content managing company 1 through the network 3. When the content managing company 1 receives the PHOTO request command from the user terminal unit 2, the content managing company 1 sends a PHOTO page shown in Fig. 14 to the user terminal unit 2 through the network 3.

The PHOTO page displays at least one folder. Each folder has a tab that displays the name thereof. The PHOTO page shown in Fig. 14 displays for example a family travel folder 151, an idol folder 152, a company folder 153, and a list folder 154. A left pane of the PHOTO page displays the VIDEO button 62, the AUDIO button 63, the PHOTO button 64, the LIST button 66, the LIBRARY button 67, and the ALL UPLOAD button 76. A lower pane of the PHOTO page displays the UPLOAD button 69, the DOWNLOAD button 70, a SMALL DISPLAY SIZE button 157a, a MEDIUM DISPLAY SIZE button 157b, a LARGE DISPLAY SIZE button 157c, a MAIL button 158, and an ATTRIBUTE DATA EDIT button 110.

With reference to the family folder 151 selected in Fig. 14, the PHOTO page will be described. The family folder 151 displays a plurality of pairs of thumbnail pictures 155 as reduced still pictures of contents and check boxes 156. Like the above-described check boxes 89a, 90a, and 107, whenever the user clicks each check box 156 with the user terminal unit 2, the state of the check box 156 cyclically changes between the checked state (a check mark appears) and the non-checked state (a check mark disappears).

When the user clicks the SMALL DISPLAY SIZE button 157a with the user terminal unit 2, a thumbnail 155 that is checked with a check mark in a check box 156 displays a thumbnail picture of a content in the small size. When the user clicks the MEDIUM DISPLAY SIZE button 157b with the user terminal unit 2, the thumbnail 155 that is checked with the check mark in the check box 156 displays the content in the medium size. When the user clicks the LARGE DISPLAY SIZE button 157c with the user terminal unit 2, the thumbnail 155 that is checked with the check mark in the check box 156 displays the content in the large size.

When the user clicks the MAIL button 158 with the user terminal unit 2, a MAIL request command is sent to the mail processing server 17 through the network 3. When the mail processing server 17 receives the MAIL request command from the user terminal unit 2, the mail processing server 17 sends a MAIL CLIENT page to the user terminal unit 2 through the network 3. The user operates the MAIL CLIENT page with the user terminal unit 2 so as to create, transmit, or receive mail.

A new folder can be created on the PHOTO page. In addition, a folder that is displayed on the PHOTO page can be deleted.

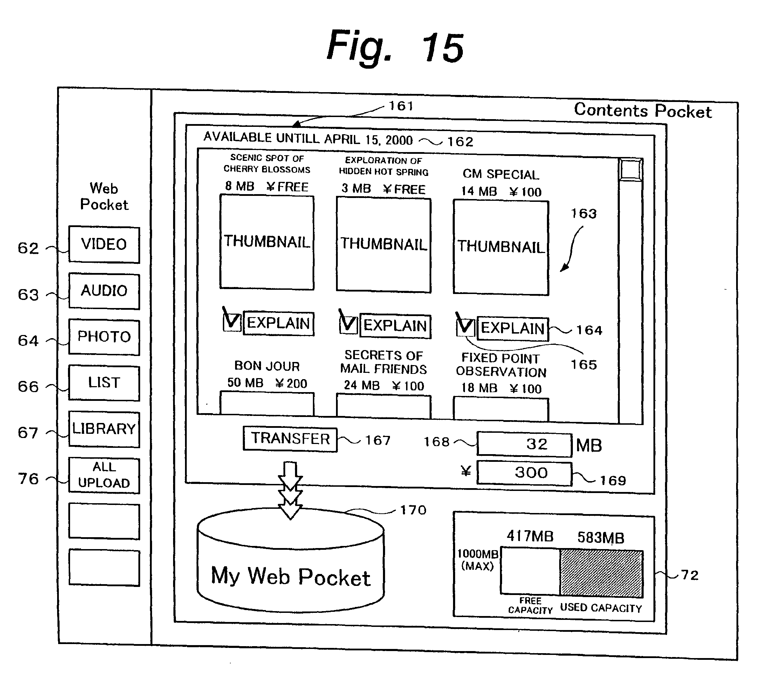

When the user clicks the LIBRARY button 67 on the user home page shown in Fig. 7 with the user terminal unit 2, a CONTENT LIBRARY request command is sent to the content managing company 1 through the network 3. When the content managing company 1 receives the CONTENT LIBRARY request command from the user terminal unit 2, the content managing company 1 sends a CONTENT LIBRARY page shown in Fig. 15 to the user terminal unit 2 through the network 3.

The CONTENT LIBRARY page displays the files of various contents. In the example shown in Fig. 15, the CONTENT LIBRARY page displays a display portion 161, a display portion 170, and a display portion 72. The display portion 161 displays data of contents that are available in a limited period. The display portion 170 displays an image of the user area 18. The display portion 72 displays the used space of the user area 18. The display portion 161 displays a display portion 162, a plurality of sets of thumbnail pictures 163, EXPLAIN buttons 164, and check boxes 165, a button 166, a TRANSFER button 167, a display portion 168, and a display portion 169. The display portion 162 displays a period for which contents are available. The thumbnail pictures 163 are reduced still pictures of contents. The EXPLAIN buttons 164 are used to explain contents corresponding to the thumbnail pictures. The button 166 scrolls the display portion 161. The TRANSFER button 167 is used to transfer a content that is checked with a check mark in a check box 165 (selected) to the user area 18. The display portion 168 displays the total capacity of the files of the contents that are checked with check marks in the check boxes 165. The display portion 169 displays the fee charged for the files of the selected contents checked with the check marks in the check boxes 165.

The display portion 161 displays the titles, capacities, and fees charged for the contents. When the user clicks an EXPLAIN buttons 164 for a content on the display portion 161 with the user terminal unit 2, the content is explained. When the user clicks the TRANSFER button 167 with the user terminal unit 2, the file of the content checked with a check mark in a check box 165 is transferred to the user area 18.

When the user clicks the TRANSFER button 167, a TRANSFER request command is sent to the delivery managing server 16 through the network 3. Since the delivery managing server 16 manages the delivery of content data, when the user sends a content purchase request to the delivery managing server 16, the delivery managing server 16 creates a database of delivery management information for each user. The delivery managing server 16 sends a copy or a link command to the library managing server 12 so as to copy or link the file of the content to the user area 18 of the user. The library managing server 12 searches the content library 11 for the file of the desired content, retrieves the file from the content library 11, and sends the file to the customer file managing server 14. The customer file managing server 14 copies the file to the user area 18 of the customer file storage 13.

At that point, the user can know whether or not the file has been copied or linked from the content library 11 to the user area 18. The display portion 72 displays the state of which contents have been copied.

In the above-described example, as the files of contents, the files of moving pictures and still pictures and the files of music programs are managed. Alternatively, software of application programs and games can be managed.

According to the embodiment, the content managing company 1 may receive contents from the content providing company 4 through the network 3 or a dedicated line. Alternatively, the content managing company 1 may send contents to the content providing company 4 using a ground wave, a satellite wave, or the like.

According to the present invention, since the file of a content is transferred from the content library to the user area of the customer file storage, the file can be easily transferred even if the data amount thereof is large.

In addition, according to the present invention, by paying the fee for a purchased content and the fee for the user area for which the user made a contract with the content managing company, the user can own the purchased content. In addition, the user can freely stream-reproduce the purchased content.

In addition, according to the present invention, the content providing company can monthly earn the maintenance charge for each content which is copied or linked to the user area from the content managing company until the content is deleted from the user area. In addition, contents can be prevented from being illegally copied by the user.

In addition, according to the present invention, when the number of contents that the user manages increases, the user will make a contract with the content managing company for an increase of the user area. Thus, the money that the content managing company earns from the user increases.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A content managing system having a content managing portion comprising:
a content library for storing and linking the files of a plurality of contents provided by a content provider;
library managing means for managing said content library;
customer file storing means for storing or linking the file of a content to an area assigned to each user;
customer file managing means for managing said customer file storing means; and
delivery managing means for managing the delivery of the files of contents to a user terminal unit,
wherein said content managing portion and the user terminal unit are connected through a network,
wherein said content managing portion is operated by the user terminal unit through the network so as to manage the file of a content of each user, and
wherein while the file of a content is stored or linked in the area, the maintenance charge for the file of each content is monthly paid to the content provider.

2. The content managing system as set forth in claim 1,
wherein when the file of a content is copied or linked from said content library and stored to the area, the content provider charges the user who has the area for the file of each content.

3. The content managing system as set forth in claim 1,
wherein the maintenance charge for the file of each content stored in the area is paid from the maintenance charge for the area of the user to the content provider.

4. The content managing system as set forth in claim 1,
wherein when said delivery managing means delivers the file of a content stored in the area to the user terminal unit, said delivery managing means stream-reproduces the content.

5. A content managing apparatus, comprising:
a content library for storing or linking the files of a plurality of contents provided by a content provider;
library managing means for managing said content library;
customer file storing means for storing or linking the file of a content to an area assigned to each user;
customer file managing means for managing said customer file storing means;
delivery managing means for managing the delivery of the files of contents to a user terminal unit; and
communicating means for connecting the content managing apparatus to a network,
wherein the content managing apparatus is connected to the user terminal unit through the network, and
wherein while the file of a content is stored or linked in the area, the maintenance charge for the file of each content is paid to the content provider.

6. The content managing apparatus as set forth in claim 5,
wherein when the file of a content is copied or linked from said content library and stored or linked to the area, the content provider charges the user who has the area for the file of each content.

7. The content managing apparatus as set forth in claim 5,
wherein the maintenance charge for the file of each content stored in the area is paid from the fee charged for the area of the user to the content provider.

8. The content managing apparatus as set forth in claim 5,
wherein when said delivery managing means delivers the file of a content stored or linked in the area to the user terminal unit, said delivery managing means steam-reproduces the content.

9. A content managing method, comprising the steps of:
disposing a content library for storing or linking the files of a plurality of contents provided by a content provider;
disposing a content managing portion for assigning a user area for storing or linking the file of a content of each user to a customer file storage;
connecting the content managing portion and the user terminal unit through a network;
operating the content managing portion through the network with the user terminal unit so as to manage the file of a content of each user; and
while the file of a content is stored or linked in the area, paying the maintenance charge for the file of each content to the content provider.

10. The content managing method as set forth in claim 9,
wherein when the file of a content is copied and linked from the content library and stored or made a linkage to the area, the content provider charges the user who has the area for the file of each content.

11. The content managing method as set forth in claim 9,
wherein the maintenance charge for the file of each content stored or linked in the area is paid from the fee charged for the area of the user to the content provider.

12. The content managing method as set forth in claim 9,
wherein when the file of a content stored in the area is delivered to the user terminal unit, the content is stream-reproduced.
